# EUROPEAN PATENT SPECIFICATION

(11) **EP 1 801 764 B1**
(45) Date of publication and mention of the grant of the patent: **16.06.2010**
(21) Application number: 06026205.2
(22) Date of filing: 18.12.2006
(51) Int. Cl.: G08G 1/0969, G01C 21/34

(54) **Navigation apparatus**
Navigationsvorrichtung
Appareil de navigation

(30) Priority: 26.12.2005 JP 2005373347
(43) Date of publication of application: 27.06.2007
(73) Proprietor: AISIN AW CO., LTD., Anjo-shi, Aichi 444-1192 (JP)
(72) Inventor: Tomita, Hiroshi, Okazaki-shi Aichi 444-8564 (JP); Nagase, Kenji, Okazaki-shi Aichi 444-8564 (JP)
(74) Representative: Kramer - Barske - Schmidtchen

(56) References cited:
- EP-A- 1 577 643
- EP-A2- 1 288 885
- US-A- 5 182 555

## Description

The present invention relates to a navigation apparatus that displays map information and displays a guidance route up to a destination on the map, and in particular, relates to a navigation apparatus that provides guidance about traffic congestion based on received road traffic information as traffic congestion information that begins with traffic control information.

In recent years, navigation apparatuses that carry out vehicle travel guidance and enable a driver to easily arrive at a desired destination are commonly mounted in vehicles. A navigation apparatus denotes an apparatus that detects the current position of a vehicle by using a GPS receiver or the like, and enables the displaying of map data that corresponds to the current position on a liquid crystal display. The map data is obtained from a recording medium such as a DVD-ROM, an HDD, or the like, or from a network. In addition, the map data that includes the current position of the vehicle is read from the recording medium, and a map image for the vicinity of the current position of the vehicle is rendered based on the map data and is displayed on a display apparatus. The map image may be displayed with a vehicle position mark superimposed thereon, and the location at which the vehicle is currently traveling can be recognized at a glance by scrolling the map image in association with the movement of the vehicle or moving the vehicle position mark over the map image that is held stationary on the screen.

In this context, various navigation apparatuses have been proposed in which the guidance route to a destination based on received road traffic information and the congested congestion road links that are included along this guidance route are distinctly displayed.

For example, among navigation apparatuses in which a map associated with the vehicle position and the guidance route to the destination are drawn on the display screen, and at the same time, road traffic information is received externally and the congestion road links are distinctly displayed on the map, there is a navigation system configured such that whether congestion road links are present along the guidance route is determined based on the received road traffic information. In the case in which they are present, a scale rate is found that enables displaying the vehicle position and the endpoint of the congestion along the guidance route on one screen, and at this scale rate, displays maps, the guidance routes, and the traffic congestion links (refer, for example, to Japanese Patent Application Publication No. JP-A-11-2538 (paragraphs (0007) to (0017); FIG. 1 to FIG. 5)).

However, in the navigation apparatus disclosed in Japanese Patent Application Publication No. JP-A-11-2538 described above, in the case in which congestion road links are present along the guidance route based on the received road traffic information, it is possible to notify the driver about congestion along the guidance route by displaying in one screen a map that extends from the vehicle position to the end of the congestion or to subsequent locations after changing the reduced scale. However, there is a problem in that the driver cannot easily grasp the cause of this congestion, that is, the type of traffic control that has caused the congestion, because the congestion information received as road traffic information is not associated with the traffic control information.

EP 1 288 885 A2, US 5 182 555 and EP 1 577 643 A1 describe navigation apparatuses that are able to detect continuity of traffic jam (congestion).

Thus, the present invention is directed to solving the problems described above, and it is an object of the present invention to provide a navigation apparatus and method that can provide recognizable guidance to a driver about the type of traffic control causing the traffic congestion when congestion road links are present along the guidance route.

This is achieved by the apparatus of claim 1 and the method of claim 6. Further developments are defined in the dependent claims.

In a navigation apparatus according to a first aspect of the present invention, in the case in which it is determined that there is congestion information concerning a traffic congestion that begins with a controlled road link for which traffic control information is present in the received traffic information, guidance about the congestion information is provided as congestion information concerning the traffic congestion that begins with the traffic control information. Therefore, the user can easily grasp the cause of the congestion, or specifically, the type of traffic control that has caused the congestion.

In addition, in the navigation apparatus according to a second aspect of the present invention, in the case in which it is determined that there are congestion road links included in the congestion information concerning the traffic congestion that begins with the controlled road link in which the traffic control information is present along the guidance route, guidance about congestion information is provided as congestion information that begins with the traffic control information. Therefore, the user can easily grasp the cause of the congestion along the guidance route, or specifically, the type of traffic control that has caused the congestion.

In addition, in the navigation apparatus according to a third aspect of the present invention, after extracting all congestion road links that are congested and connected to controlled road link for which traffic control information is present, in the case in which there are congestion road links included among the extracted congestion road links along the guidance route, it is determined that there are congestion road links in the congestion information concerning the traffic congestion that begins with this controlled road link along the guidance route. Therefore, it is possible to determine correctly the congestion information to be congestion information concerning the traffic congestion that begins with traffic control information not only in the case in which traffic control information concerning a link which is present along the guidance route, but also in the case in which traffic control information is not present along the guidance route.

In addition, in the navigation apparatus according to a fourth aspect of the present invention, guidance is provided about the congestion information as congestion information concerning the traffic congestion that begins with the traffic control information concerning a link which is present within a predetermined range from the vehicle position. Therefore, the user can easily grasp the cause of congestion, or specifically, the user can recognize that this congestion has been caused by the traffic control that is present within the prescribed distance range from the vehicle position.

Furthermore, in the navigation apparatus according to a fifth aspect of the present invention, the map information and the congestion road links that are congested are displayed in the display means so as to be distinguishable as congestion information that begins with the traffic congestion information. Therefore, the user can easily grasp the cause of the congestion along this guidance route from the display portion, or specifically, the type of traffic control that has caused the congestion, and the user can easily identify a detour for detouring around this congestion from the map.
FIG. 1 is a block diagram showing a navigation apparatus according to the present embodiment;
FIG. 2 is an explanatory drawing for explaining the communication between the navigation apparatus and a road traffic information center (VICS);
FIG. 3 is a main flowchart showing the congestion information guidance processing that is executed by the navigation apparatus and in which guidance is provided about the congestion information that begins with the traffic control information;
FIG. 4 is a sub-flowchart showing the sub-processing for the traffic congestion link acquisition processing in FIG. 3;
FIG. 5 is a drawing of an image for explaining the content of the processing of step 3 through step 5 in FIG. 3; and
FIG. 6 is a drawing showing an example of the display screen and the congestion guidance message that are executed in step 6 in FIG. 3.

Hereinafter the navigation apparatus according to the present invention will be explained in detail with reference to the drawings based on an example of a specific embodiment.

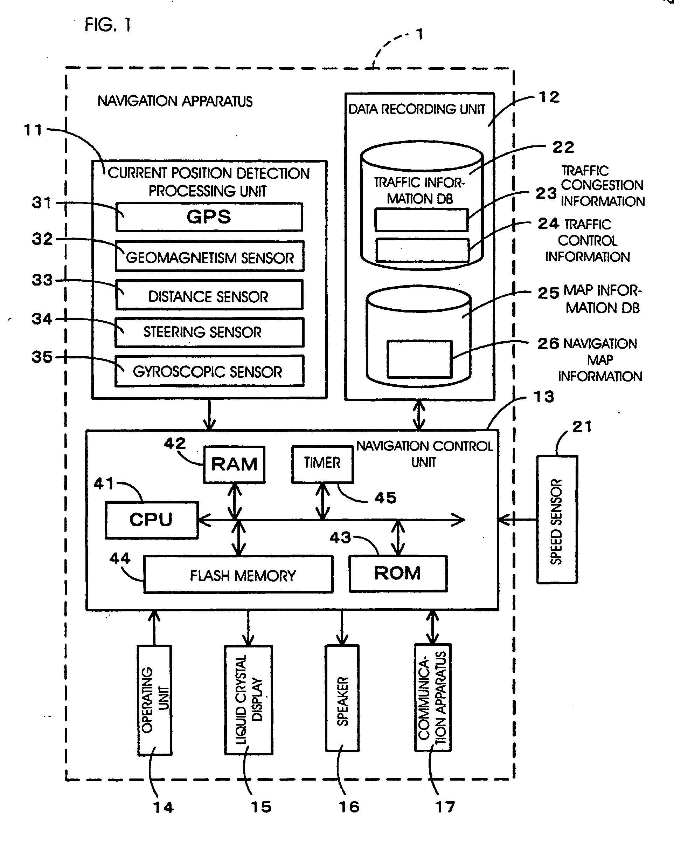

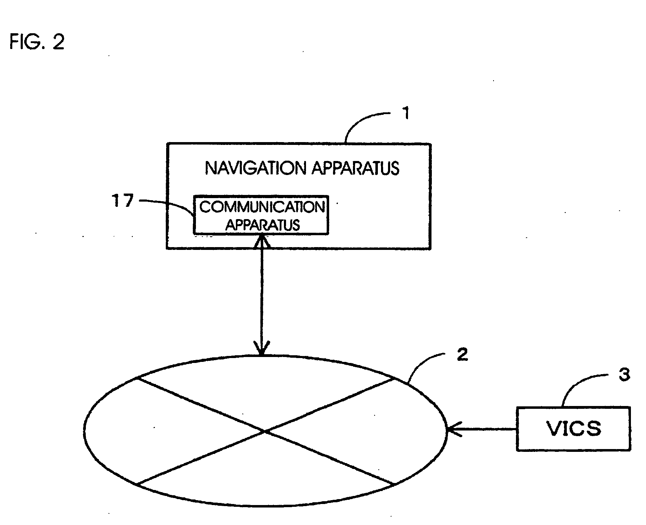

First, a schematic configuration of the navigation apparatus according to the present embodiment will be explained with reference to FIG. 1 and FIG. 2. FIG. 1 is a block diagram showing the navigation apparatus 1 according to the present embodiment. FIG. 2 is an explanatory figure for explaining the communication between the navigation apparatus 1 and a road traffic information center (Vehicle Information and Communication System) 3.

As shown in FIG. 1, the navigation apparatus 1 according to the present invention is composed of a current position detection processing unit 11 that detects the current position of the vehicle (below, referred to as the "vehicle position"); a data recording unit 12 in which various types of data are recorded; a navigation control unit 13 that carries out various types of arithmetic processing based on the information that has been input; an operating unit 14 that receives operations from the operator; a liquid crystal display 15 that displays information such as maps to the operator; a speaker 16 that outputs audio guidance related to the guidance route, traffic control information to be described below, and guidance about congestion information; and a communication apparatus 17 that carries out communication with information centers such as a road traffic information center (VICS) 3. In addition, a speed sensor 21 that detects the travel speed of the vehicle is connected to the navigation control unit 13.

In addition, as shown in FIG. 2, the navigation apparatus 1 is connected to a road traffic information center (VICS (trademark): Vehicle Information and Communication System) 3 via a network 2. Additionally, the navigation apparatus 1 is configured so as to be able to receive at prescribed time intervals information related, for example, to congestion along the road and traffic information such as traffic control information that are produced by gathering information in the traffic control systems of the police, the Japan Highway Public Corporation, and the like, from the road traffic information center (VICS) 3 via a network 2. In addition, this traffic information is detailed information that relates to road congestion information about, for example, congestion along the roads, and traffic information for traffic control information and the like that depends on road repairs, road construction, and the like. In the case of road congestion information, this detailed information includes, for example, the VICS link IDs, which will be explained below, the actual length of the congestion, the expected time required for the congestion to clear up, and in the case of traffic control information, includes the VICS link IDs, which will be explained below, the continuous period for road repairs and road construction, the types of traffic control, such as road closings, traffic restricted to one side of the street, lane control, the period of the traffic control, and the like.

In addition, examples of communication systems that can be used as the network 2 include communication networks such as a LAN (Local Area Network), a WAN (Wide Area Network), an intranet, a mobile telephone network, a land line-telephone network, a public communication network, a dedicated communication network, and the Internet. In addition, it is possible to employ a communication system that uses broadcast satellites, such as CS broadcasting, BS broadcasting, digital terrestrial television broadcasting, FM multiplex broadcasting, and the like. Furthermore, it is possible to use a communication system such as the non-stop automatic toll payment system (ETC) that is used in an intelligent transport system (ITS) or a dedicated short-range communication (DSRC) system.

Below, each of the essential components that configure the navigation apparatus 1 will be explained with reference to FIG. 1. As shown in FIG. 1, the current position detection processing unit 11 includes a GPS 31, a geomagnetism sensor 32, a distance sensor 33, a steering sensor 34, a gyroscopic sensor 35 that functions as a bearing detecting unit, an altimeter (not illustrated), and the like, and enables detecting the current position and the bearing of the vehicle, the distance to a landmark (for example, intersections), and the like.

Specifically, the GPS 31 detects the current position of the vehicle on the surface of the earth and the current time by receiving radio waves generated by artificial earth satellites; the geomagnetism sensor 32 detects the vehicle bearing by measuring geomagnetism; and the distance sensor 33 detects the distance between predetermined positions on the road and the like. In this context, as a distance sensor 33, it is possible to use, for example, a sensor that measures the revolution speed of the vehicle wheels (not illustrated) and detects the distance based on the measured revolution speed or a sensor that measures the acceleration and detects the distance by integrating the measured acceleration twice.

In addition, the steering sensor 34 detects the steering angle of the vehicle. Here, an optical rotation sensor that is installed, for example, on the rotating portion of the steering wheel (not illustrated), a rotation resistance sensor, an angle sensor installed on the vehicle wheels, and the like can be used as the steering sensor 34.

In addition, the gyroscope sensor 35 detects the turning angle of the vehicle. Here, for example, a gas rate gyroscope or a vibrating gyroscope or the like can be used as the gyroscope sensor 35. In addition, it is possible to detect the vehicle bearing by integrating the turning angle that has been detected by the gyroscope sensor 35.

In addition, the data recording unit 12 is provided with a hard disk (not illustrated) that serves as an external memory apparatus and a recording medium, and a recording head (not illustrated), which is a driver for reading a traffic information DB 22, a map information DB 25, and predetermined programs and the like that are recorded on the hard disk, and for writing predetermined data onto the hard disk. Note that in the present embodiment, although a hard disk is used as the external memory apparatus and the recording medium for the data recording unit 12, besides a hard disk, it is also possible to use a magnetic disk such as a flexible disk as the external memory apparatus. In addition, it is possible to use a memory card, magnetic tape, a magnetic drum, CD, MD, DVD, optical disk, MO, IC card, an optical card and the like as the external memory apparatus.

In addition, the congestion information 23 that is produced from the traffic information related to the current state of the road congestion formed from the actual length of congestion and the expected time for the congestion to clear up, which are received from the road traffic information center (VICS) 3, and the like are stored in the traffic information DB 22. In addition, the traffic control information 24 is stored in this traffic information DB22. The traffic control information 24 is produced from traffic information that is received from the road traffic information center (VICS) 3, and relates to traffic control information and the like that depends on road repairs, road construction and the like, which are subject to traffic control.

In addition, classification information, information about the position, the distance between the congested segments, degree of the congestion and the like are included along with VICS link IDs in the traffic information received from the road traffic information center (VICS) 3. A VICS link ID is an identification number appended to the VICS links as standardized travel guidance links by partitioning roads at predetermined intersections. Note that information such as the coordinates of the origin and termination in each of the VICS links, the distances between origins and terminals, and the like, are included in the traffic information.

Here, the roads (links) and the VICS links that are stored in the map information DB 25 are not identical (generally, the roads (links) are more detailed than the VICS links). Thus, a conversion table (reference table) for converting between the link IDs and the VICS link IDs, which are appended to each road (link) as an identification number, is included in the traffic information DB 22, and it is possible to specify the associated link IDs based on the VICS link IDs. Thus, when a VICS link ID is received from the road traffic information center (VICS) 3, the navigation apparatus 1 can specify the segment of the road for which road traffic information about congestion and the like should be displayed based on the VICS link ID. In addition, the VICS link ID for the road traffic information related to current road congestion and the like that is received from the road traffic information center (VICS) 3 is converted to a link ID and stored as congestion information 23. In addition, a VICS link ID for road traffic information related to traffic control information and the like that is received from the road traffic information center (VICS) 3 is converted to a link ID and stored as traffic control information 24.

In addition, navigation map information 26 that is used in the travel guidance and route searches for the navigation apparatus 1 is stored in the map information DB 25. Here, the navigation map information 26 is configured by various types of information necessary for the route guidance and map display and is configured, for example, by the new road information that specifies new roads, map display data for displaying maps, intersection data related to each intersection, node data for node points, link data related to roads (links) that are a type of facility, search data for searching for routes, store data related to a POI (Point of Interest) for stores and the like that are a type of facility, and search data for searching for locations and the like. In addition, the content of the map information DB 25 is updated by downloading updated information that is distributed via a communication apparatus 17 from the map information distribution center (not illustrated).

Here, in particular, the map display data is configured based on a secondary mesh that is partitioned into 10 km by 10 km sections, and it is configured in units partitioned into 4 partitions (length: 1/2), 16 partitions (1/4), or 64 partitions (1/8), and the units for each location are set such that the data amount in each unit is at substantially the same level. The 64-partition sized unit, which is the smallest, has a size equivalent to an approximately 1.25 km square.

In addition, data recorded as node data relates, for example, to junctions for actual roads (including intersections, T intersections and the like); coordinates (positions) of node points that are set in each road at prescribed distances depending on the radius of curvature; node attributes that show, for example, whether a node is a node that is associated with an intersection; a connecting link number list that is a list of link IDs, which are identification numbers for links connected to a node; an adjacent node number list, which is a list of node numbers of nodes that are adjacent to a node via a link, the height (altitude) of each node point, and the like.

In addition, various types of data are recorded as link data. The link data includes data that relates to each link that forms a road. Examples of data that is recorded include data that represents the width of the road that is included in a link, inclination, cant, banking, the condition of the road surface, the number of lanes in the road, locations where the number of lanes decreases, locations where the road narrows, railroad crossings, and the like; data that represents, in relation to corners, the radius of curvature, intersections, T intersections, entrances and exits at corners and the like; data that, in relation to road attributes, represents upward and downward slopes and the like; and data that, in relation to road types, represents, in addition to general roads such as national roads, prefectural roads, local streets, and the like, represents national expressway, urban expressway, toll roads such as general toll roads and toll bridges and the like. Furthermore, in relation to toll roads, data related, for example, to the access roads (ramp ways) of the entrances and exits to the toll roads, toll booths (interchanges), and the like, is recorded.

In addition, the search data records for data that is used when searching for and displaying a route up to a set destination, and is formed by cost data that is used to calculate the search costs, which include the cost when transiting nodes and the cost of the links (below, referred to as the "link cost") that form the roads, and route display data for displaying the guidance route that has been selected by the route search on a map in the liquid crystal display 15.

In addition, data related to POI such as hotels, hospitals, gasoline stations, parking lots, and tourist facilities in each area is recorded along with an ID that specifies the POI as store data. Note that audio output data for outputting audio information by the speaker 16 of the navigation apparatus 1 is also recorded in the map information DB 25.

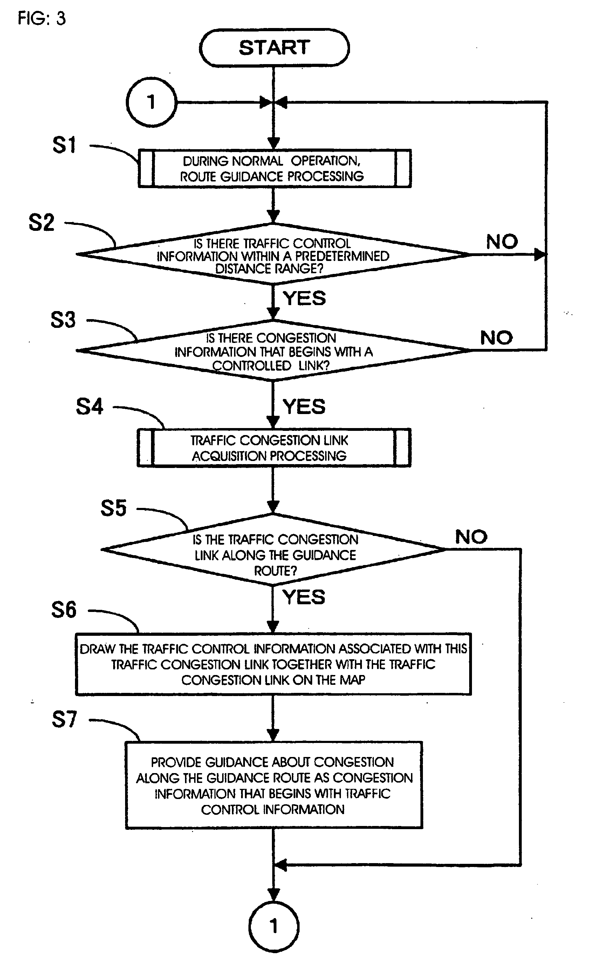

In addition, as shown in FIG. 1, the navigation control unit 13 that forms the navigation apparatus 1 includes a CPU 41 that serves as an arithmetic apparatus and a control apparatus that carry out overall control of the navigation apparatus 1; a RAM 42 that is used as working memory when the CPU 41 carries out various arithmetic processes and at the same time records route data for routes that have been searched and link IDs in which the traffic control information which is described below is present; a ROM 43 that records, in addition to control programs, a congestion information guidance process program (refer to FIG. 3) that provides guidance about congestion information that begins with the traffic control information described below; an internal memory apparatus such as flash memory 44 that stores programs that have been read from the ROM 43, a timer 45 that measures time, and the like. Note that a semiconductor memory, electromagnetic core and the like can be used as the RAM 43, ROM 43, and the flash memory 44. In addition, instead of the CPU 41, MPU and the like can be used as the arithmetic apparatus and the control apparatus.

In addition, in the present embodiment, various programs are stored in the ROM 43 and various types of data are stored in the data memory unit 12, but programs, data and the like can be written to the flash memory 44 after reading the programs and data from similar external memory apparatuses, memory cards, and the like. Furthermore, it is possible to update the programs and data by replacing a memory card and the like.

Furthermore, an operating unit 14, the liquid crystal display 15, the speaker 16, and various peripheral devices (actuators) for the communication apparatus 17 are electrically connected to the navigation control unit 13.

The operating unit 14 is operated, for example, when the present position at the start of the travel is corrected, and departure point is input as the guidance starting point and the destination is input as the guidance end point, and when carrying out a search of information related to facilities. The operating unit 14 is constructed by a plurality of operating switches such as various types of keys. In addition, the navigation control unit 13 carries out control in which various associated actions are executed based on the switch signals output by pressing each of the switches down. Note that a keyboard, a mouse, a barcode reader, a remote control apparatus for remote control, a joystick, a light pen, a stylus or the like can be used as the operating unit 14. Furthermore, the operating unit 14 can be constructed by a touch panel provided at the front of the liquid crystal display 15.

In addition, the operating guidance, operating menu, key guidance, guidance route from the current position to the destination, guidance information along the guidance route, traffic information, news, weather reports, time, mail, television programs and the like are displayed in the liquid crystal display 15. Note that instead of the liquid crystal display 15, a CRT display, a plasma display or the like can be used, and a hologram apparatus that projects a hologram onto the front windshield glass of the vehicle can be used.

In addition, the speaker 16 outputs audio guidance that provides guidance about travel along the guidance route based on instructions from the navigation control unit 23 and audio guidance that provides guidance about congestion information that begins with the traffic control information to be described below. Here, examples of audio guidance for providing guidance include "In 200 m, turn right at intersection X" and "Ahead, due to lane control, there is congestion for about 3 km." Note that in addition to a synthesized voice, it is possible to output various sound effects or various types of guidance information recorded in advance on tape, in memory, or the like as audio that is to be output from the speaker 16.

In addition, the communication apparatus 17 is a beacon receiver such as a radio beacon apparatus that is installed along the road, a radio beacon via an optical beacon apparatus, an optical beacon or the like, that receives road traffic information including congestion information, traffic control information, parking lot information, traffic accident information, information about the crowding conditions at service areas and the like that have been sent from, for example, from the road traffic information center (VICS) 3. In addition, the communication apparatus 17 is a network means that enables communicating over communication systems of communication networks such as a LAN, WAN, intranet, a mobile cell network, a land-line telephone network, a public communication network, a dedicated communication network, and a communication network such as the Internet that serve as the network 2. Furthermore, in addition to information from the road traffic information center (VICS) 3, the communication apparatus 17 is provided with an FM receiver that receives FM multiplex information that includes information such as news, weather reports and the like via an FM broadcast radio station as an FM multiplexed broadcast. Note that the beacon receiver and the FM receiver are integrated and mounted in the VICS receiver, but they may be installed separately.

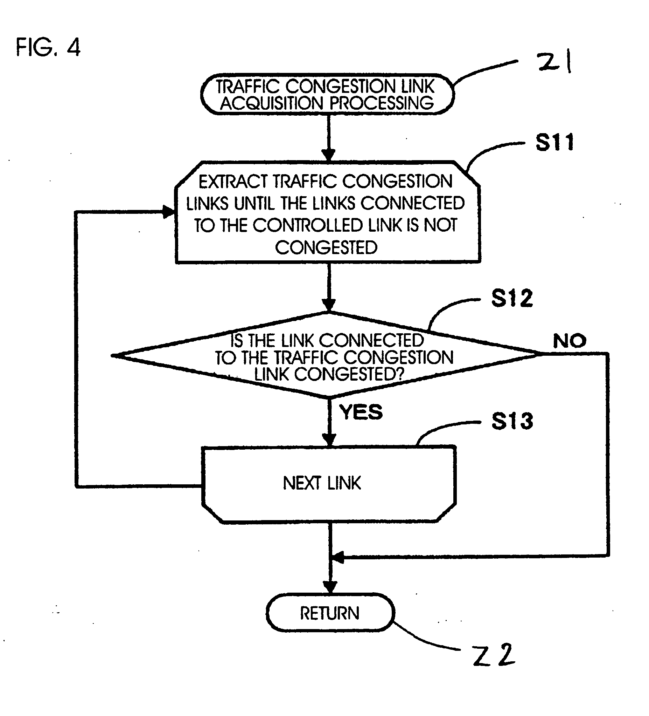

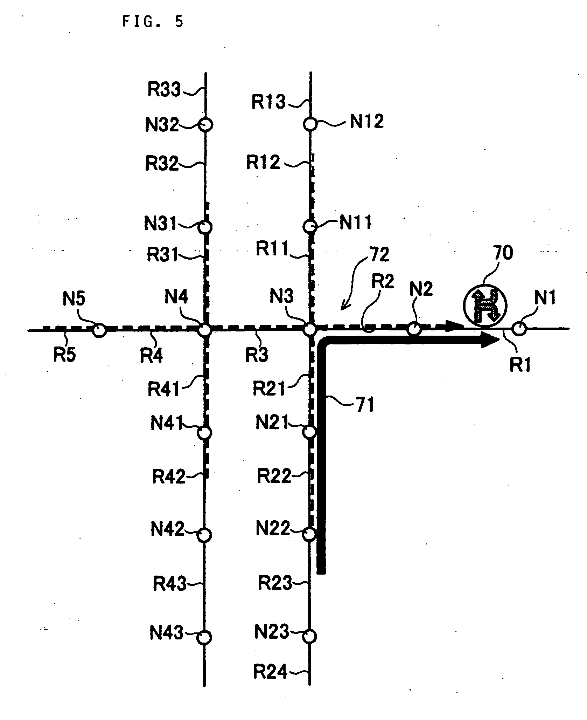

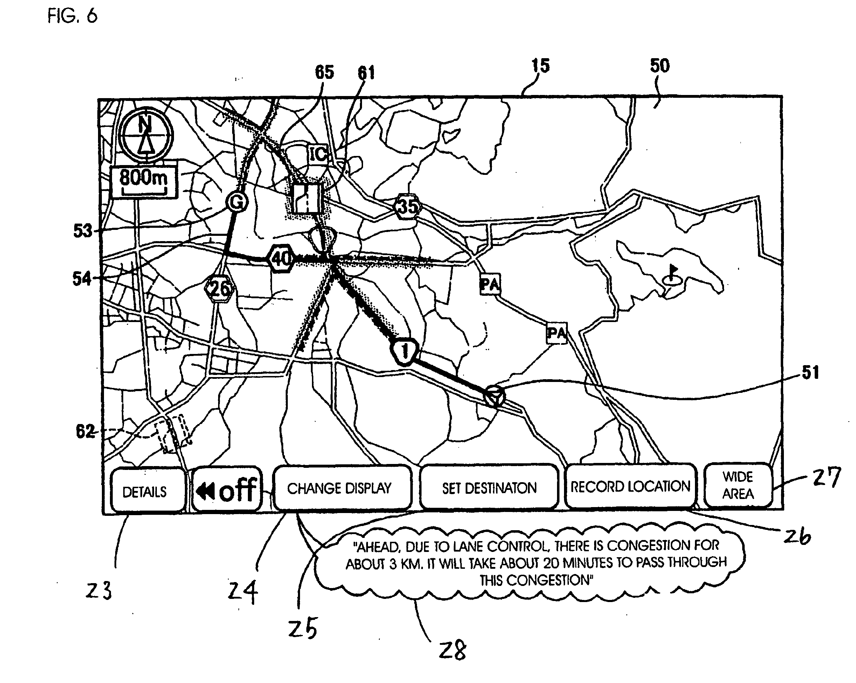

Next, the congestion information guidance processing program will be explained in detail with reference to FIG. 3 through FIG. 6. The congestion information guidance processing program is executed by the CPU 41 in the navigation apparatus 1 having the configuration described above and provides guidance about congestion information that begins with the traffic control information described above. FIG. 3 is a congestion information guidance processing program that is executed by the navigation apparatus 1 according to the present embodiment and provides guidance about the congestion information that begins with the traffic control information. FIG. 4 is a sub-flowchart showing the sub-processing for the "traffic congestion link acquisition processing". FIG. 5 is a drawing of an image for explaining the processing content of step 3 to step 5 in FIG. 3. FIG. 6 is a drawing showing an example of the display screen and congestion guidance messages that are executed in step 6 in FIG. 6. Note that the program shown in the flowcharts in FIG. 3 and FIG. 4 below is stored in the RAM 42 and the ROM 43 provided to the navigation apparatus 1, and are executed by the CPU 41.

As shown in FIG. 3, first, in step 1 (below, step is abbreviated "S") of the congestion information guidance processing program, the CPU 41 detects the vehicle position by using the current position detection processing unit 11, reads the map data that includes this vehicle position from the navigation map information 26, draws a map image 50 (refer to FIG. 6) of the vicinity of the vehicle position based on the map data, and displays the same in the liquid crystal display 15. At the same time, the CPU 41 superimposes and displays a vehicle mark 51 (refer to FIG. 6) that shows the vehicle position on the map image 50, and displays the current position at which the vehicle is traveling so that it may be understood at a glance by scrolling the map image according to the movement of the vehicle or holding the map image 50 stationary in the screen and moving the vehicle position mark 51. In addition, the CPU 41 carries out the display by changing the display state such that the guidance route 54 up to a destination 53 is visually distinguished from the other roads on the map image 50. Note that the CPU 41 executes the processing in S1 every 30 seconds to 3 minutes, and then executes the processing in S2 and after.

Next, in S2, the CPU 41 reads traffic control information 24 of the traffic information DB 22, and executes the determination processing that determines whether or not there is traffic control information 24 about road repairs, road construction, or traffic limited to one lane due to a traffic accident and the like that are present within a range of a predetermined distance (about 10 km to 50 km) from the vehicle position. In addition, in the case in which there is no traffic control information 24 that is present within a range of a predetermined distance (about 10 km to 50 km) from the vehicle position (S2: NO), the CPU 41 executes the processing in S1 again.

In contrast, as shown in FIG. 6, in the case in which there is traffic control information 61 and 62 present within a range of a predetermined distance (about 10 to 50 km) from the vehicle position (S2: YES), the CPU 41 moves to the processing in S3. In S3, for the traffic control information 61 and 62 that is present within a range of a predetermined distance (about 10 to 50 km) from the vehicle, the CPU 41 executes determination processing that determines whether or not there is congestion information 23 that begins with each link (below, referred to as a "controlled link (controlled road link)") in which the traffic control information 61 and 62 are present. Specifically, the CPU 41 executes determination processing that determines whether or not there is congestion information 23 in which the link ID where the congestion starts (below, referred to as a "traffic congestion link (congestion road link)") is a link ID that is identical to a controlled link.

Next, in the case in which there is no congestion information 23 in which the traffic congestion link begins with a controlled link in which traffic control information 24 is present (S3: NO), the CPU 41 executes the processing of S1 and subsequent steps again. In addition, in contrast, as shown in FIG. 5, in the case in which there is congestion information 72 (shown by the broken line) in which the traffic congestion link R1 where the congestion starts is identical to a controlled link R1 in which traffic control information 70 is present (S3: YES), in S4, the CPU 41 executes sub-processing of the "traffic congestion link acquisition processing" described below.

Here, the sub-processing of the "traffic congestion link acquisition processing" that the CPU 41 executes in S4 will be explained with reference to FIG. 4 and FIG. 5. As shown in FIG. 4, in S11, the CPU 41 extracts traffic congestion links until the links connected to each of the nodes of the starting point and ending point of the controlled links are not congested, and stores the result in the RAM 42. Next, in S12, the CPU 41 executes determination processing in which it is determined whether or not the next link that is connected to the final traffic congestion link of the connected traffic congestion links that were extracted in S11 is a traffic congestion link. In addition, in the case in which the next link connected to the final traffic congestion link extracted in S11 is not a traffic congestion link that is congested (S12: NO), the CPU 41 determined that all of the traffic congestion links have been extracted, ends this sub-processing, returns to the main flowchart, and moves to the processing in S5.

In contrast, in the case in which the next link connected to the final traffic congestion link of the connected traffic congestion links that have been extracted in S11 is a traffic congestion link that is congested (S12: YES), the CPU 41 loops on the next link, and stores this next link as a traffic congestion link that is connected to a controlled link. Note that in the case in which the subsequent links are all links outside the range of a predetermined distance (about 50 to 60 km) from the vehicle position, the loop is ended, the sub-processing is completed, and the processing returns to the main flowchart and moves to the processing in S5.

For example, as shown in FIG. 5, the CPU 41 extracts the traffic congestion link R1 that is identical to the controlled link R1, the traffic congestion links R2 to R5, which are connected to the node N2, the traffic congestion links R11 and R12 and the traffic congestion links R21 and R22 that are connected to node N3, and the traffic congestion links R31 and R32 and the traffic congestion links R41 and R42 that are connected to node N4, and stores these links in the RAM 42 as the traffic congestion links of the congestion information 72 that begins with the controlled link R1 in which traffic control information 70 is present.

Next, as shown in FIG. 3, in S5, the CPU 41 executes a determination processing in which it is determined whether or not the traffic congestion links that have been extracted in S4 are along the guidance route. Then, in the case in which the traffic congestion links extracted in S4 are not along the guidance route (S5: NO), the CPU 41 executes the processing in S1 and after again. In contrast, in the case in which the traffic congestion links that were extracted in S4 are along the guidance route, or specifically, in the case in which traffic congestion links included in the guidance route are present among these extracted traffic congestion links (S5: YES), the CPU 41 moves to the processing in S6. In particular, as shown in FIG. 5, in the case in which the traffic congestion links R1, R2, R21, and R22 among the traffic congestion links R1 to R42 of the congestion information 72 that begins with the controlled link R1 are along the guidance route 71, or specifically, in the case in which the traffic congestion links R1, R2, R12, and R22 are included in the links that form the guidance route 71 (S5: YES), the CPU 41 moves to the processing in S6.

Next, in S6, the CPU 41 distinctly displays the traffic control information 24 that is associated with the traffic congestion links that were extracted in S4 and the traffic congestion links that form the congestion information 23 that begins with this traffic control information 24 in the map image 50 of the liquid crystal display 15. In addition, simultaneously, in S7, the CPU 41 provides audio guidance about the congestion along the guidance route via the speaker 16 as congestion information 23 that begins with the traffic control information 24 that is associated with the traffic congestion links that were extracted in S4. Additionally, the processing in S1 and after is executed again after a predetermined time interval (for example, about 1 minute to 3 minutes) has passed.

For example, as shown in FIG. 6, traffic control information 61 that shows lane control is displayed by flashing in the map image 50 on the liquid crystal display 15, and at the same time, the traffic congestion links that form the congestion information 65 that begins with this traffic control information 61 are displayed by a flashing red broken line. In addition, along the guidance route 54, which connects the vehicle position mark 51, showing the vehicle position, and the destination 53, is displayed as a blue bold line. In addition, simultaneously, in the case in which the total distance of the traffic congestion links along the guidance route 54 is 3 km, the traffic control information 61 is about lane control, and the vehicle speed is about 150 m/minute, audio guidance stating "Ahead, due to lane control, there is congestion for about 3 km. It will take about 20 minutes to pass through this congestion" is provided via the speaker 16. Note that because there is no congestion information 23 that begins with the traffic control information 62, the traffic control information 62 is not displayed.

According to the above detailed explanation, in the navigation apparatus 1 according to the present embodiment, in the case in which there is traffic control information 24 within the range of a predetermined distance from the vehicle position and there is congestion information 23 in which the traffic congestion link R1 where the congestion begins is identical to the controlled link R1 in which the traffic control information 24 is present, the traffic congestion links that form the congestion information 23 are all extracted (S2 to S4). Next, in the case in which there are traffic congestion links along the guidance route among these extracted traffic congestion links, the CPU 41 distinctly displays the traffic control information 24 that is associated with the traffic congestion links and the congestion information 23 that begins with this traffic control information 24 on the map of the liquid crystal display 15, and at the same time, provides audio guidance about the congestion along the guidance route via the speaker 16 as congestion information 23 that begins with this traffic control information 24 (S5 to S7).

Thereby, because the guidance about the congestion is provided as congestion information 23 that begins with the traffic control information 24, the user can easily grasp the cause of the congestion along the guidance route, or specifically, what kind of traffic control information 24 has caused the congestion. In addition, because the traffic control information 24 that is associated with the traffic congestion links and the congestion information 23 that begins with this traffic control information 24 are distinctly displayed in the map image 50 on the liquid crystal display 15, the user can easily decide on a detour for detouring around this congestion.

In addition, in S4, after extracting all the traffic congestion links R1 to R42 that are connected to the controlled link R1 in which traffic control information 70 is present and the traffic congestion links that are connected to controlled links in which traffic control information 61 is present, in the case in which, in S5, there are traffic congestion links included along the guidance routes 71 and 54 among these extracted traffic congestion links R1 to R42, because it is determined whether there are traffic congestion links along the guidance routes 71 and 54 in the congestion information 72 and 65, which begins with these controlled links, as shown in FIG. 5, not only in the case in which traffic control information 70 is present along the guidance route 71, but as shown in FIG. 6, also in the case in which traffic control information 61 is not present along the guidance route 54, it is possible to determine correctly the congestion along the guidance route 54 as congestion information 65 that begins with this traffic control information 61.

Note that the present invention is not limited by the present embodiment, and of course various improvements and modifications within a range that does not depart from the present invention as defined in the claims are possible. The following, for example, can be made.
(A) In FIG. 6, the traffic control information 62 is not displayed because there is no congestion information 23, but all of the traffic control information 24 within a predetermined range from the vehicle position may be displayed. Thereby, it is possible to determine more easily a detour for detouring around the congestion.
(B) In addition, in FIG. 6, in the identical reduced display in the map image 50 that displays the guidance route 54, in the case in which the traffic control information 61 that is associated with the traffic congestion links along the guidance route 54 cannot be displayed, this traffic control information 61 is not displayed and thus only audio guidance about the traffic control information 24 may be provided by the speaker 16. Thereby, it is possible to confirm easily that the congestion of the guidance route 54 is congestion that begins with the traffic control information 61.
(C) In addition, in FIG. 6, in the identical reduced scale display in the map image 50 that displays the guidance route 54, in the case in which the traffic control information 61 that is associated with the traffic congestion links along the guidance route 54 is not displayed, the traffic control information 61 may be displayed superimposed on the congestion information 65 in the peripheral portion of the display screen. Thereby, it is possible to confirm more easily that the congestion of the guidance route 54 is congestion that begins with the traffic control information 61.

## Claims

1. A navigation apparatus (1) comprising:
a communication portion (17) adapted to receive traffic information (22), the traffic information comprising congestion information (23) and traffic control information (24);
a congestion information determining portion (13) adapted to determine whether or not the received traffic information contains congestion information concerning a traffic congestion that begins with a controlled road link for which traffic control information is present; and
a guidance control portion (13) adapted to carry out control such that guidance about congestion information is provided as congestion information that begins with the traffic control information in the case in which the congestion information determining portion (13) has determined that there is congestion information concerning the traffic congestion that begins with the controlled road link for which traffic control information is present.

2. The navigation apparatus (1) according to claim 1, further comprising:
a traffic congestion link determining portion (13) adapted to determine whether or not there are congestion road links included in the congestion information concerning the traffic congestion that begin with the controlled road link along a guidance route wherein:
the guidance control portion (13) is adapted to carry out control such that guidance about congestion information is provided as congestion information that begins with the traffic control information in the case in which the traffic congestion link determining portion (13) has determined that there are congestion road links included in the congestion information concerning the traffic congestion that begins with the controlled road link along the guidance route.

3. The navigation apparatus (1) according to claim 2, further comprising:
an extracting portion (13) adapted to extract all congested congestion road links that are connected to the controlled road link; wherein:
the congestion link determining portion (13) is adapted to determine that there are congestion road links included in the congestion information concerning the traffic congestion that begins with the controlled road link along the guidance route in the case in which there are congestion road links included in the congestion road links that have been extracted by the extracting portion along the guidance route.

4. The navigation apparatus (1) according to any one of claim 1 to claim 3, wherein the traffic control information is traffic control information that concerns a link which is present within a predetermined distance range from the vehicle position.

5. The navigation apparatus (1) according to any one of claim 1 to claim 4, further comprising:
a display portion (15) adapted to display the map information and the congestion road links that are congested, wherein:
the guidance control portion (13) is adapted to carry out control such that the congestion road links are distinctly displayed in the display portion as congestion information that begins with the traffic control information.

6. A navigation method comprising:
receiving traffic information (22) comprising congestion information (23) and traffic control information (24);
determining whether or not the received traffic information contains congestion information concerning a traffic congestion that begins with a controlled road link in which traffic control information is present ; and
carrying out control such that guidance about congestion information is provided as congestion information that begins with the traffic control information in the case for which it has been determined that there is congestion information concerning the traffic congestion that begins with the controlled road link for which traffic control information is present.

7. The navigation method according to claim 6, further comprising:
determining whether or not there are congestion road links included in the congestion information concerning the traffic congestion that begins with the controlled road link along a guidance route, and
carrying out the control such that guidance about congestion information is provided as congestion information that begins with the traffic control information in the case in which it has been determined that there are congestion road links included in the congestion information concerning the traffic congestion that begins with the controlled road link along the guidance route.

8. The navigation method according to claim 7, further comprising:
extracting all congested congestion road links that are connected to the controlled road links; and
determining that there are congestion road links included in the congestion information concerning the traffic congestion that begins with the controlled road link along the guidance route in the case in which there are congestion road links included in the extracted congestion road links along the guidance route.

9. The navigation method according to any one of claims 6 to 8, wherein the traffic control information is traffic control information that concerns a link which is present within a predetermined distance range from the vehicle position.

10. The navigation method according to any one of claims 6 to 9, further comprising:
displaying the map information and the congestion road links that are congested, and
carrying out the control such that the congestion road links are distinctly displayed in the display portion as congestion information that begins with the traffic control information.

11. A computer program product comprising computer executable instructions adapted to perform the steps of any of claims 6-10.

## Patentansprüche

1. Navigationsvorrichtung (1), mit
einem Kommunikationsbereich (17), der dazu angepasst ist, eine Verkehrsinformation (22) zu empfangen, wobei die Verkehrsinformation eine Stauinformation (23) und eine Verkehrsbeeinflussungsinformation (24) aufweist,
einem Stauinformationsbestimmungsbereich (13), der dazu angepasst ist, zu bestimmen, ob die empfangene Verkehrsinformation eine Stauinformation, die einen Verkehrsstau betrifft, der mit einer beeinflussten Straßenverbindung, für die eine Verkehrsbeeinflussungsinformation vorliegt, beginnt, enthält oder nicht, und
einem Erläuterungssteuerbereich (13), der dazu angepasst ist, eine Steuerung derart auszuführen, dass eine Erläuterung über eine Stauinformation als eine Stauinformation, die mit der Verkehrsbeeinflussungsinformation beginnt, geliefert wird, in dem Fall, in dem der Stauinformationsbestimmungsbereich (13) bestimmt hat, dass es eine Stauinformation gibt, die den Verkehrsstau betrifft, der mit der beeinflussten Straßenverbindung, für die eine Verkehrsbeeinflussungsinformation vorliegt, beginnt.

2. Navigationsvorrichtung (1) nach Anspruch 1, weiter mit
einem Verkehrsstauverbindungsbestimmungsbereich (13), der dazu angepasst ist, zu bestimmen, ob es Staustraßenverbindungen, die in der Stauinformation, die den Verkehrsstau betrifft, der mit der beeinflussten Straßenverbindungen beginnt, enthalten sind, entlang einer Führungsroute gibt oder nicht, wobei
der Erläuterungssteuerbereich (13) dazu angepasst ist, eine Steuerung derart auszuführen, dass eine Erläuterung über eine Stauinformation als eine Stauinformation, die mit der Verkehrsbeeinflussungsinformation beginnt, geliefert wird, in dem Fall, in dem der Verkehrsstauverbindungsbestimmungsbereich (13) bestimmt hat, dass es Staustraßenverbindungen, die in der Stauinformation, die den Verkehrsstau betrifft, der mit der beeinflussten Straßenverbindung beginnt, enthalten sind, entlang der Führungsroute gibt.

3. Navigationsvorrichtung (1) nach Anspruch 2, weiter mit
einem Extrahierbereich (13), der dazu angepasst ist, alle gestauten Staustraßenverbindungen, die mit der beeinflussten Straßenverbindung verbunden sind, zu extrahieren, wobei
der Stauverbindungsbestimmungsbereich (13) dazu angepasst ist, zu bestimmen, dass es Staustraßenverbindungen, die in der Stauinformation, die den Verkehrsstau betrifft, der mit der beeinflussten Straßenverbindung beginnt, enthalten sind, entlang der Führungsroute gibt, für den Fall, dass es Staustraßenverbindungen, die in den Staustraßenverbindungen, die von dem Extrahierbereich extrahiert wurden, enthalten sind, entlang der Führungsroute gibt.

4. Navigationsvorrichtung (1) nach einem der Ansprüche 1 bis 3, bei dem die Verkehrsbeeinflussungsinformation eine Verkehrsbeeinflussungsinformation ist, die eine Verbindung, die in einem vorbestimmten Abstandsbereich von der Fahrzeugposition liegt, betrifft.

5. Navigationsvorrichtung (1) nach einem der Ansprüche 1 bis 4, weiter mit
einem Anzeigebereich (15), der dazu angepasst ist, die Karteninformation und die Staustraßenverbindungen, die gestaut sind, anzuzeigen, wobei
der Erläuterungssteuerbereich (13) dazu angepasst ist, eine Steuerung derart auszuführen, dass die Staustraßenverbindungen individuell auf dem Anzeigebereich als Stauinformation, die mit der Verkehrsbeeinflussungsinformation beginnt, angezeigt werden.

6. Navigationsverfahren mit
Empfangen von Verkehrsinformation (22), die eine Stauinformation (23) und eine Verkehrsbeeinflussungsinformation (24) aufweist,
Bestimmen, ob die empfangene Verkehrsinformation eine Stauinformation, die einen Verkehrsstau betrifft, der mit einer beeinflussten Straßenverbindung, in der eine Verkehrsbeeinflussungsinformation vorliegt, beginnt, enthält oder nicht, und
Ausführen einer Steuerung derart, dass eine Erläuterung über Stauinformation als Stauinformation, die mit der Verkehrsbeeinflussungsinformation beginnt, geliefert wird, für den Fall, für den bestimmt wurde, dass es eine Stauinformation gibt, die den Verkehrsstau betrifft, der mit der beeinflussten Straßenverbindung, für die die Verkehrsbeeinflussungsinformation vorliegt, beginnt.

7. Navigationsverfahren nach Anspruch 6, weiter mit
Bestimmen, ob es Staustraßenverbindungen, die in der Stauinformation, die den Verkehrsstau betrifft, der mit der beeinflussten Straßenverbindung beginnt, enthalten sind, entlang einer Führungsroute gibt oder nicht, und
Ausführen der Steuerung derart, dass eine Erläuterung über eine Stauinformation als eine Stauinformation, die mit der Verkehrsbeeinflussungsinformation beginnt, geliefert wird, in dem Fall, in dem bestimmt wurde, dass es Staustraßenverbindungen, die in der Stauinformation, die den Verkehrsstau betrifft, der mit der beeinflussten Straßenverbindung beginnt, enthalten sind, entlang der Führungsroute gibt.

8. Navigationsverfahren nach Anspruch 7, weiter mit
Extrahieren aller gestauten Staustraßenverbindungen, die mit den beeinflussten Straßenverbindungen verbunden sind, und
Bestimmen, dass es Staustraßenverbindungen, die in der Stauinformation, die den Verkehrsstau betrifft, der mit der beeinflussten Straßenverbindung beginnt, enthalten sind, entlang der Führungsroute gibt, für den Fall, dass es Staustraßenverbindungen, die in den extrahierten Staustraßenverbindungen enthalten sind, entlang der Führungsroute gibt.

9. Navigationsverfahren nach einem Ansprüche 6 bis 8, bei dem die Verkehrsbeeinflussungsinformation eine Verkehrsbeeinflussungsinformation ist, die eine Verbindung, die innerhalb eines vorbestimmten Abstandsbereichs von der Fahrzeugposition liegt, betrifft.

10. Navigationsverfahren nach einem der Ansprüche 6 bis 9, weiter mit
Anzeigen der Karteninformation und der Staustraßenverbindungen, die gestaut sind, und
Ausführen der Steuerung derart, dass die Staustraßenverbindungen individuell auf dem Anzeigebereich als Stauinformation, die mit der Verkehrsbeeinflussungsinformation beginnt, angezeigt werden.

11. Ein Computerprogrammprodukt, mit computerausführbaren Anweisungen, dass dazu angepasst ist, die Schritte einer der Ansprüche 6 bis 10 durchzuführen.

## Revendications

1. Appareil de navigation (1), comprenant :
un module de communication (17) adapté pour recevoir des informations de circulation (22), lesdites informations de circulation comprenant des informations d'encombrement (23) et des informations de régulation du trafic (24) ;
un module de détermination d'informations d'encombrement (13) adapté pour déterminer si oui ou non les informations de circulation reçues contiennent des informations d'encombrement concernant un encombrement de la circulation qui commencent avec un tronçon de route contrôlé pour lequel des informations de régulation du trafic sont présentes ; et
un module de commande de guidage (13) adapté pour effectuer la commande de telle façon que le guidage concernant les informations d'encombrement est fourni sous la forme d'informations d'encombrement qui commencent avec les informations de régulation du trafic lorsque le module de détermination d'informations d'encombrement (13) a déterminé qu'il y a des informations d'encombrement concernant l'encombrement de la circulation qui commencent avec le tronçon de route contrôlé pour lequel des informations de régulation du trafic sont présentes.

2. Appareil de navigation (1) selon la revendication 1, comprenant en plus :
un module de détermination de tronçon de route encombré (13) adapté pour déterminer si oui ou non des tronçons de route encombrés sont inclus dans les informations d'encombrement concernant l'encombrement de la circulation qui commencent avec le tronçon de route contrôlé le long d'un trajet de guidage, dans lequel :
le module de commande de guidage (13) est adapté pour effectuer la commande de telle façon que le guidage concernant les informations d'encombrement est fourni sous la forme d'informations d'encombrement qui commencent avec les informations de régulation du trafic lorsque le module de détermination de tronçon de route encombré (13) a déterminé que des tronçons de route encombrés sont inclus dans les informations d'encombrement concernant l'encombrement de la circulation qui commencent avec le tronçon de route contrôlé le long du trajet de guidage.

3. Appareil de navigation (1) selon la revendication 2, comprenant en plus :
un module d'extraction (13) adapté pour extraire tous les tronçons de route encombrés qui sont reliés au tronçon de route contrôlé, dans lequel :
le module de détermination de tronçon de route encombré (13) est adapté pour déterminer que des tronçons de route encombrés sont inclus dans les informations d'encombrement concernant l'encombrement de la circulation qui commencent avec le tronçon de route contrôlé le long du trajet de guidage lorsque des tronçons de route encombrés sont inclus dans les tronçons de route encombrés qui ont été extraits par le module d'extraction le long du trajet de guidage.

4. Appareil de navigation (1) selon l'une quelconque des revendications 1 à 3, dans lequel les informations de régulation du trafic sont des informations de régulation du trafic qui concernent un tronçon qui se trouve dans une plage de distance prédéterminée par rapport à la position du véhicule.

5. Appareil de navigation (1) selon l'une quelconque des revendications 1 à 4, comprenant en plus :
un module d'affichage (15) adapté pour afficher les informations cartographiques et les tronçons de route qui sont encombrés, dans lequel :
le module de commande de guidage (13) est adapté pour effectuer la commande de telle façon que les tronçons de route encombrés sont distinctement affichés par le module d'affichage sous la forme d'informations d'encombrement qui commencent avec les informations de régulation du trafic.

6. Procédé de navigation, comprenant les étapes consistant à :
recevoir des informations de circulation (22) comprenant des informations d'encombrement (23) et des informations de régulation du trafic (24) ;
déterminer si oui ou non les informations de circulation reçues contiennent des informations d'encombrement concernant un encombrement de la circulation qui commencent avec un tronçon de route contrôlé pour lequel des informations de régulation du trafic sont présentes ; et
effectuer la commande de telle façon que le guidage concernant les informations d'encombrement est fourni sous la forme d'informations d'encombrement qui commencent avec les informations de régulation du trafic lorsqu'il a été déterminé qu'il y a des informations d'encombrement concernant l'encombrement de la circulation qui commencent avec le tronçon de route contrôlé pour lequel des informations de régulation du trafic sont présentes.

7. Procédé de navigation selon la revendication 6, comprenant en plus les étapes consistant à :
déterminer si oui ou non des tronçons de route encombrés sont inclus dans les informations d'encombrement concernant l'encombrement de la circulation qui commencent avec le tronçon de route contrôlé le long d'un trajet de guidage ; et
effectuer la commande de telle façon que le guidage concernant les informations d'encombrement est fourni sous la forme d'informations d'encombrement qui commencent avec les informations de régulation du trafic lorsqu'il a été déterminé que des tronçons de route encombrés sont inclus dans les informations d'encombrement concernant l'encombrement de la circulation qui commencent avec le tronçon de route contrôlé le long du trajet de guidage.

8. Procédé de navigation selon la revendication 7, comprenant en plus les étapes consistant à :
extraire tous les tronçons de route encombrés qui sont reliés au tronçon de route contrôlé ; et
déterminer que des tronçons de route encombrés sont inclus dans les informations d'encombrement concernant l'encombrement de la circulation qui commencent avec le tronçon de route contrôlé le long du trajet de guidage lorsque des tronçons de route encombrés sont inclus dans les tronçons de route encombrés extraits le long du trajet de guidage.

9. Procédé de navigation selon l'une quelconque des revendications 6 à 8, dans lequel les informations de régulation du trafic sont des informations de régulation du trafic qui concernent un tronçon qui se trouve dans une plage de distance prédéterminée par rapport à la position du véhicule.

10. Procédé de navigation selon l'une quelconque des revendications 6 à 9, comprenant en plus les étapes consistant à :
afficher les informations cartographiques et les tronçons de route qui sont encombrés, et
effectuer la commande de telle façon que les tronçons de route encombrés sont distinctement affichés par le module d'affichage sous la forme d'informations d'encombrement qui commencent avec les informations de régulation du trafic.

11. Produit logiciel informatique comprenant des instructions exécutables par un ordinateur, adapté pour effectuer les étapes selon l'une quelconque des revendications 6 à 10.
